Europäisches Patentamt

(19) European Patent Office

Office européen des brevets

(11) Publication number: **0 251 792**
**A2**

(12) **EUROPEAN PATENT APPLICATION**

(21) Application number: 87305854.9

(22) Date of filing: 01.07.87

(51) Int. Cl.⁴: **C 08 L 77/00**
**C 08 L 67/02, C 08 L 9/02,**
**C 08 L 33/06, C 08 K 3/22,**
**C 08 L 9/00, C 08 J 7/18**

(30) Priority: 02.07.86 GB 8616136

(43) Date of publication of application:
07.01.88 Bulletin 88/01

(84) Designated Contracting States:
AT BE CH DE ES FR GB GR IT LI LU NL SE

(71) Applicant: **BICC Public Limited Company**
**Devonshire House Mayfair Place**
**London W1X 5FH (GB)**

(72) Inventor: **Corish, Patrick Joseph**
**Mayberry Church Road Shitterfield**
**Stratford-on-Avon Warwickshire (GB)**

**Ohbi, Daijit Singh**
**79 Edward Avenue**
**Narborough Road South Leicester (GB)**

(74) Representative: **Poole, Michael John et al**
**BICC plc Patents and Licensing Department 38 Ariel Way**
**Wood Lane**
**London W12 7DX (GB)**

(54) **Elastomeric compositions and methods of making them.**

㉗ A halogen-free, flame-retardant elastomeric composition which is cross-linkable at least by high-energy irradiation and (when cross-linked) is resistant to sea-water, hydrocarbon oils hydraulic fluids comprises

(A) an oil-resistant elastomeric thermoplastic segmented copolymer selected from polyether-polyesters and polyether-polyamides;

(B) an elastomeric nitrile polymer of defined constitution;

(C) optionally up to one part for each three parts of ingredient (B) of another miscible elastomer which is a diene elastomer or an acrylic elastomer; and

(D) alumina trihydrate.

Ingredient (A) constitutes 10-70% of total elastomer content and ingredient (D) is present in an amount up to about twice the total elastomer amount but sufficient for the composition to have an oxygen index of at least 25. Ingredients (A) and (B) are pre-blended at a temperature above 160°C, and the temperature can then be reduced to around 135°C to mix in the alumina trihydrate without decomposing it.

EP 0 251 792 A2

## Description

<u>ELASTOMERIC COMPOSITIONS AND METHODS OF MAKING THEM</u>

This invention relates to elastomeric compositions that are halogen free, flame-retardant and resistant to hydrocarbon oils and many other fluids, and which in preferred forms are suitable, <u>inter alia</u>, for making electric cable sheaths to comply with Naval Engineering Standard NES 518 (Issue 2) promulgated by the UK Ministry of Defence (Controllerate of the Navy) in February 1986. It includes a method of making the compositions and cables sheathed with them.

Cables on board ship (whether naval or merchant) are liable to rough usage, including (but not limited to) accidental exposure to sea-water, fuel oil, lubricating oil, hydraulic fluid and other liquids; and the hazards of fire at sea will always be greater than on land. There is therefore a demand for cables that contribute little or nothing to the spread of fire and cannot produce hydrogen chloride fumes or other corrosive volatiles under fire conditions, which are resistant to exposure to at least the fluids indicated, besides having good abrasion resistance and long service life. Such demands cannot be met by conventional cable-making materials.

Halogen-free elastomeric compositions with good fluid resistance exist, but some are not usefully cross-linkable by any of the conventional techniques of the cable industry and others fail to meet one or more of the requirements of the Standard. Many of these compositions have high processing temperatures that make it difficult to use alumina trihydrate, which would otherwise be the preferred halogen-free flame-retardant filler.

In accordance with one aspect of the invention, a halogen-free, flame-retardant elastomeric composition which is cross-linkable at least by high-energy irradiation and (when cross-linked) is resistant to sea-water, hydrocarbon oils and hydraulic fluids comprises

(A) an oil-resistant elastomeric thermoplastic segmented copolymer selected from polyether-polyesters and polyether-polyamides;

(B) an elastomeric nitrile polymer having (i) a hydrocarbon main chain which chain is saturated or contains up to a maximum of two double bonds and/or epoxidised double bonds for every five of its carbon atoms and (ii) a minimum of one -CN side-chain per 22 chain carbon atoms and up to one <u>hetero</u> side chain per four carbon atoms with the proviso that at least 70% of the <u>hetero</u> side chains are -CN;

(C) optionally up to one part for each three parts of ingredient (B) of another miscible elastomer which is either a diene elastomer or an acrylic elastomer; and

(D) alumina trihydrate

Ingredient (A) constituting 10-70% of total elastomer content and Ingredient (D) being present in an amount up to about twice the total elastomer content but sufficient for the composition to have an oxygen index of at least 25.

One or more of the Ingredients (A), (B), and (C) may of course, be a mixture of two or more materials, each of which is of the class defined.

It is noted, for avoidance of doubt, that the term 'hetero side chain' as used herein means a side chain not consisting solely of carbon and hydrogen atoms; and that percentages of side-chains are expressed by number but percentages and parts of ingredients are expressed by weight.

Preferred Ingredient (A) is one of the segmented polyester elastomers sold under the trademark HYTREL, of which we prefer those believed to be constituted of polytetremethylene ether glycol terephthalate segments of approximate or average repeating unit $[-O-(CH_2)_4-]_p-O-CO-\phi-CO-]$, in which p is about 14 and $\phi$ = phenylene, and 1,4 butanediol polyether segments of repeating unit $[-O-(CH_2)_4-]$ 'High Productivity' grades of HYTREL which differ in having their polyether segments based on polypropylene glycol, can also be used.

So far as the applicants know, the only alternatives for Ingredient A at present commercially available on the United Kingdom market are the segmented elastomeric polyether-polyamides sold under the trademark PEBAX. These are believed to consist of polyamide segments derived from 12-amino dodecanoic acid or its lactam (the monomer of "nylon 12") and polyether segments derived from 1,4 butanediol (also called tetramethylene glycol).

Ingredient (B) may be a conventional "NBR" type of nitrile rubber, i.e. a random copolymer of butadiene and acrylonitrile, or it may be a random butadiene/acrylonitrile copolymer modified by hydrogenation, epoxidization, or the inclusion of a third monomer (within the limitations already specified); particularly useful third monomers are those (such as methacrylic acid or acrylic acid) which introduce -COOH side-chains and those (such as N(4 anilinophenyl) methacrylamide, $H\phi-NH-\phi-NH-CO-C(CH)=CH$) which confer on the polymer an inherent resistance to oxidation (bound antioxidants). Alternatives include ordered (e.g. alternate) butadiene/acrylonitrile copolymers; partially or fully hydrogenated and/or epoxidised ordered butadiene/acrylonitrile and copolymers of isoprene with acrylonitrile. Fully hydrogenated polymers are in all cases preferred because they have significantly better ageing properties. In all cases hydrocarbon side chains may be present in appropriate amounts, an important example being phenyl side-chains in styrene-modified elastomers.

Optional Ingredient (C), if present, is preferably selected <u>either</u> from diene rubbers, such as natural rubbers, styrene-butadiene rubbers and polybutadiene rubbers, that have been modified to confer oil resistance upon them, for example by epoxidization, methacrylation or maleinization <u>or</u> from the oil-resistant acrylic elastomers such as the copolymers of ethylene with methyl acrylate, ethyl acrylate or butyl acrylate, or modified forms with a minor content of a third comonomer, such as the material sold under the trademark VAMAC.

However, if other requirements make it desirable, diene elastomers that are not by themselves oil resistant can be used, though naturally the amount should be kept as small as practicable. Examples include unmodified styrene-butadiene rubbers, ethylene-propylene copolymer elastomers, ethylene-propylene-diene terpolymer elastomers (EPDM), polybutadienes and conjugated diene-iso butylene copolymer elastomers (butyl rubber). When more than one of these Ingredient (C) elastomers is present, the limit of one part per three parts of Ingredient (B) then applies to the total of all Ingredient (C) elastomers.

Preferably any Ingredient (C) elastomer is co-cross-linkable with Ingredient (B), especially if Ingredient (C) is not oil resistant and/or the proportion of Ingredient (C) is in the upper part of its range; this may sometimes be considered essential for particular applications.

Conventional flame-retardant filler grades of alumina trihydrate can be used. Minor amounts of other flame retardant or inert fillers can be present in addition.

The compositions of the invention may also include customary amounts of conventional compounding ingredients, such as stabilisers, antioxidants, cross-linking agents and/or promotors, pigments, plasticisers/extenders and lubricants.

Ingredients (A) and (B) can be pre-blended by conventional mixing techniques at a temperature appropriate to Ingredient A, say about 160-180°C. Addition of alumina trihydrate (which loses significant amounts of water at 160°C) presents obvious problems. Surprisingly, however, we have found that a pre-blend of Ingredients (A) and (B) will satisfactorily accept the addition of fillers at temperatures much lower than is necessary for producing the pre-blend.

In accordance with another aspect of the present invention, therefore, a method of making the compositions defined comprises first blending Ingredient (A) with Ingredient (B) at a temperature not less than 160°C and when a pre-blend has been prepared reducing the temperature below 150°C (preferably to about 135°C) and mixing in alumina trihydrate at such reduced temperature.

Optional Ingredient (C), if used, is preferably added at the first stage; cross-linking agents and volatile ingredients (e.g. some antioxidants) at the second; and other optional ingredients may be added at either stage, as convenient.

Properties achieved by the compositions of the invention are strongly dependent on the effective mixing and dispersion of the ingredients; the use of a 2-roll mill or of an internal mixer such as Francis Shaw's K2A Intermixer for at least the second stage is strongly recommended.

In the following examples, which illustrate the invention, the ingredients identified by trade designations are identified as follows (words marked # are trademarks):

Polymers

Chemigum # NX775: a carboxylated butadiene/acrylonitrile elastomer containing about one double bond per 5 chain carbon atoms, about one -CN side chain per 12 chain carbon atoms and about one -COOH group per 50 chain carbon atoms.

Chemigum # N715: a butadiene/acrylonitrile elastomer containing about one double bond per 6 chain carbon atoms and about one - CN side chain per 11 carbon atoms.

Chemigum # HR665: a butadiene/acrylonitrile/bound antioxidant elastomer containing about one double bond per 6 chain carbon atoms and about one - CN side chain per 10 carbon atoms.

Hytrel # 4056: an elastomeric segmented polyester-polyether of the preferred kind already described.

Therban 1707: a fully hydrogenated butadiene/acrylonitrile copolymer with about one -CN sidechain per 20 chain carbon atoms

Fillers

Hydral # 705 and Hydral # 710B: filler grade alumina trihydrates of median particle size respectively 0.5 and 1µm.

Silica HDK H20: silane-treated hydrophobic reinforcing silica filler of nominal BET surface area 170m²/g.

SRF: a semi-reinforcing carbon black of nominal surface area (electron microscopy) 40m²/g.

Ultrafine 15E: alumina trihydrate of BET specific surface area about 15m²/g

Ultrafine 35E: alumina trihydrate of BET specific surface area about 35m²/g

Vulcasil # S: precipitated silica of nominal surface area 175m²/g.

Coating Agents

Silane A172: Vinyl-tris ( β-methoxyethoxy)silane

Silane A9774: a proprietary silane supplied by Union Carbide Corp. and believed to be a mixture of approximately equal parts of vinyl triethyoxysilane and an oligomer thereof.

Plasticisers and Lubricants

Bisoflex # TL79T (stab): stabilised trimellitate of predominantly linear alcohols, $C_7$ to $C_9$

Bisoflex # TOT: tri 2-ethylhexyl trimellitate.

Bisoflex # T810T (stab): stabilised trimellitate of $C_8$ and $C_{10}$ linear alcohols.

Monoplas # 530: another $C_7$ to $C_9$ trimellitate plasticiser

Plasticator # 85: an ether thioether plasticiser.

Curative Systems:
HVA-2: N,N'meta phenylene dimaleimide
  Perkadox# 14-40: a 40% dispersion of a bis (tert butyl peroxy 150 propyl) benzene in a solid carrier.
  Sartomer# 350: trimethylolpropane trimethacrylate
  TAC: Triallylcyanurate

Antioxidants, Stabilisers etc.
  Agerite# Resin D: Polymerised 1,2 dihydro 2,2,4 trimethyl quinoline
  Arbestab DSTDP: distearyl thio dipropionate
  Dythal#: lead phthalate paste (2 parts lead phalate to 1 part Monoplas plasticiser, for which see above)
  Flectol# H or Flectol#: polymerised 1,2 dihydro 2,2 4 trimethyl quinoline
  Hytrel# 10MS: polycarbo-di-imide, 20% in a Hytrel masterbatch
  Hytrel# G30HS: Proprietary Hytrel antioxidant masterbatch.
  Irganox# 1010: a sterically hindered phenolic antioxidant.
  Kemgard# 911A: proprietary molybdenum based smoke suppressant.
  Kenreact# TTS: iso propyl trisostearyl titanate    Maglite# DE: high activity magnesium oxide
  Naugard# 445: an alkylated diphenol amine
  Santoflex# IPPD: N-isopropyl-N'-phenyl para phenylene diamine.
  Vulcanox# MB-2: mixture of 4- and 5- methyl 2-mercaptobenzimidazole.
  Vulcanox# MB-2/MG: mixture of 4- and 5- methyl 2-mercaptobenzimidazole in microgranule form.
  Vulcanox# ZMB-2: mixture of zinc salts of 4- and 5- methyl 2-mercaptobenzimidazole.
  Weston 618: distearyl pentaerythritol diphosphite
  Two mixing procedures were used in the examples:

Procedure A
  This is a two-stage process using a two-roll mill. In the first stage, the mill rolls were pre-heated to about 165°éC and the segmented polymer (Ingredient A) introduced, together (when appropriate) with Hytrel# antioxidant masterbatch. When fluxed, the nitrile elastomer (Ingredient B) was added and blended in, followed when required by Arbestab DSTDP or Weston 618 antioxidant. After blending for two minutes, the temperature was gradually reduced to 130°C and the mixture sheeted off and allowed to mature for about 24 hours. In the second stage, the mills rolls were pre-heated to about 140°C and the matured mixture introduced and plastified. Any antioxidant not already present was added, followed by the filler in four equal batches; when a silane coupling agent was used, this was added with the first batch of filler; when Kenreact# TTS was used, this was added with the second batch of filler and Dythal# paste added with the third: otherwise half the Dythal# paste was added with each of the second and third batches of filler. Immediately after addition of the last batch of filler, the plasticiser was added gradually over a period of around two minutes. The temperature was now reduced to 120°C and the crosslink promoter (or coagent) added, and mixing continued until the blend was visually uniform.

Procedure B
  This is also a 2-stage process but uses a Banbury mixer; in the first stage this was preheated to 160°C and all the polymeric ingredients and masterbatches added. After two minutes, or when mixing was evident, Weston 618 or Arbestab DSTDP was added and mixing continued for a further 5 minutes, with cooling for the last 2 minutes. The mix was then 'dumped', sheeted off and matured for about 24 hours. In the second stage, the Banbury chamber was preheated to 130°C and the matured blend introduced. After it had masticated for about 90 seconds, the antioxidant(s) was/were added followed by the filler in three equal portions: the first together together with the silane coupling agent, the second with the Dythal# paste, as the third with the plasticiser(s). The curing coagent was added and cooling immediately commenced, and the mix 'dumped' and sheeted off within about 2 minutes.

Example 1
  36 parts of the segmented copolymer Hytrel# 4056 was blended with 60 parts of the carboxylated nitrile rubber Chemigum# NX775, 120 parts of filler Hydral# 710B, 4 parts Hytrel# masterbatch 10MS, 10 parts SRF, 4 parts of a 50% mixture of Silane A172 with an inert diluent, 4 parts Kemgard# 911A, 4 parts of a 70%-active TAC formulation, 6 parts of Dythal#, 10 parts Monoplas# 530, and 2 parts Agerite# resin D, using Procedure B in a laboratory Banbury mixer. Sheets 150 mm square and 1.0 mm thick were cured by electron-beam irradiation at a dose of 175kGy, and samples prepared according to the requirements of NES 518 were found to have a tensile strength of 10.8 MPa, 100% modulus of 9.6 MPa, elongation (at break) of 250% and tear resistance of 5.6 M/mm. The 'K factor' of insulation resistance was 0.1 MΩkm, and oxygen index 30.5. Fluid resistance was measured by exposing separate irradiated samples for 28 days to diesel fuel (DERV) at 20°C, hydraulic fluid OX-38 at 50°C and deionised water at 50°C. The volume swelling observed was respectively 8.4%, 6.3% and 11%; the percentage of tensile strength retained 90%, 102% and 73%, and the percentage of elongation at break retained 95%, 95% and 103%.

## Example 2

This was identical with Example 1 except that 3 parts SRF and 7 parts of Vulcasil # S were used instead of 10 parts SRF. Mechanical and electrical properties were found to be substantially the same.

## Example 3

27 parts Hytrel # 4056 was blended with 70 parts Chemigum # NX 775, 3 parts Hytrel # 10MS and other ingredients as listed in Example 1 (except the Agerite # Resin D was replaced by 1 part of Flectol # H) using Procedure A. After processing as before, the tensile strength was found to be 11.8 MPa, 100% modulus 8.8 MPa, elongation 330%, tear resistance 7.1 N/mm; the K factor was found to be 0.89 M Ω km and the oxygen index 30.7. In the fluid resistance test, the swelling volumes were 8.2%, 8.7% and 11.7%, tensile retention 92%, 96% and 75% and elongation retention 85%, 100% and 87%.

## Example 4

36 parts Hytrel # 4056, 60 parts Chemigum # NX775, 4 parts Hytrel # 10MS and 114 parts Hydral # 710B were blended with 2 parts SRF, 2 parts Silane Y9774, 15 parts Vulcasil # S, 4 parts Kemgard # 911A, 4 parts 70%-active TAC formulation, 6 parts Dythal #, 10 parts Bisoflex # TL79T (stab) and 1 part Flectol # H using Procedure A. Samples were prepared and irradiated as before, and found to have a tensile strength of 11.1 MPa, 100% modulus 10.2 MPa; elongation 230%; tear resistance 7.4. N/mm; and hot modulus at 150°C 1.58 MPa. The K factor was 0.06 M Ω km. In accelerated ageing tests, the elongation at break was found to be 130% after 7 days at 110°C, 60% after 3 days at 135°C, and only 5% after 7 days at 135°C.

## Examples 5-8

The compositions for these examples were as Example 4 except for the following modifications to the stabliser system:    Example 5: 3 parts Santoflex # IPPD added

Example 6: 3 parts Vulcanox # MB-2 added

Example 7: 2 parts Vulcanox # MB-2 added and content of Flectol # H increased to 2 parts

Example 8: 3 parts Irganox 1010 added

Examples 5, 6 and 8 used Procedure A; Example 7 used procedure B on a full-scale industrial mixer (a Francis Shaw Intermix type K2A.)

Properties were as follows (in the same units as above).

| Example | 5 | 6 | 7 | 8 |
|---|---|---|---|---|
| Tensile strength | 10.4 | 10.2 | 12.4 | 11 |
| 100% modulus | 9.0 | 9.6 | 10.2 | 9.2 |
| Elongation | 220 | 290 | 300 | 230 |
| Tear resistance | 8.7 | 10 | 5.9 | 7.1 |
| 100% modulus (150°C) | 0.9 | 0.81 | --- | 1.3 |
| K Factor | 0.29 | 0.98 | 0.6 | 0.76 |
| Elongation afater 7 days ageing at 110°C | 130 | 230 | 190 | 155 |
| Elongation after 3 days ageing at 135°C | 95 | 135 | 170 | 60 |
| Elongation after 7 days ageing at 135°C | 20 | 60 | 20 | 10 |

and additionally for Example 7:
oxygen index 30.1
temperature index 260
elongation after exposure at 110°C for 14, 21 and 28 days, 150%, 110% and 70% respectively.

| Fluid resistance: | DERV | OX-38 | Water |
|---|---|---|---|
| Volume swelling: | 7.8 | 7 | 15.7 |
| Tensile strength retention | 101 | 100 | 93 |
| Elongation retention | 104 | 97 | 117 |

Example 9

This differed from Example 8 only in having a non-carboxylated nitrile rubber, Chemigum # N715, in place of Chemigum # NX 775. Tensile strength of the irradiated samples was 4.9 MPa, 100% modulus 3.5 MPa at 20°C and 0.74 MPa at 150°C, elongation 320%, tear resistance 6.6N/mm; the K factor was 0.89 and elongation values after ageing were 285% after 7 days at 110°C, 175% after 3 days at 135°C and 50% after 7 days at 135°C.

Examples 10-11

36 parts Hytrel # 4056 was blended with 30 parts each of Chemigum # NX775 and Chemigum # HR 665, 4 parts Hytrel # masterbatch 10 MS, 2 parts Hytrel # masterbatch G30 HS, 115 parts Hydral # 710B, 2 parts SRF, 10 parts Silica HDK H20, 4 parts Kemgard # 911A, 2 parts Sartomer # 350, 6 parts Dythal #, 10 parts Bisoflex # TL79T (stab), 1 part Flectol # H, 0.25 parts Weston 618, 4 parts Maglite DE, 2 parts Silane Y9774 and 2 parts of either Vulcanox MB-2 (Example 10) or Naugard 445 (Example 11) using Procedure A. Initial mechanical properties of irradiated samples were substantially the same for both Examples:
Tensile strength 11.2 and 11.0 MPa respectively
100% modulus 10.4 and 10 MPa respectively
Elongation 250%
Tear resistance 5.2N/mm.
Elongation values after ageing at 100°C showed some significant differences between Examples 10 and 11, but those after ageing at 135°C were inconclusive:

|  |  | Example 10 | Example 11 |
|---|---|---|---|
| 110°C | - 14 days | 165% | 102% |
|  | - 21 days | 159% | 85% |
|  | - 28 days | 170% | 80% |
| 135°C | - 7 days | 90% | 100% |
|  | - 14 days | 70% | 20% |
|  | - 28 days | 5% | 5% |

Examples 12-15

In each of the Examples, a blend was made by Procedure A and included 54 parts Hytrel# 4056, 20 parts each Chemigum# NX775 and Chemigum# HR665, 6 parts Hytrel# masterbatch 10MS, 3 parts Hytrel masterbatch G3OHS, 110-125 parts Hydral# 710B, 2 parts SRF, 4 parts Kemgard# 911A, 2 parts Sartomer# 350, 6 parts Dythal#, 1.5 parts Kenreact# TTS, 4 parts Maglite# DE and 2 parts Silane Y9774. The specific amounts of Hydral# 710B was 110 parts in Example 12, 125 parts in examples 13 and 15 and 120 parts in Example 14. In addition: Examples 12-14 included 10 parts Silica HDK H20; Examples 13-15 included 1.5 parts zinc stearate; Examples 12-14 included 15 parts Bisoflex# TL79T (stab) and Example 15 the same weight of Plasticator# 85; Examples 12-14 included 2 parts Vulcanox# MB-2 and Example 15 the same weight of Vulcanox# ZMB-2; Examples 12, 13 and 15 contained respectively 0.25, 1 and 1 parts of Arbestab# DSTDP and Example 14 contained 1 part of Weston 618.

Physical properties of irradiated samples (in the same units as before) were as follows:-

| Example | 12 | 13 | 14 | 15 |
|---|---|---|---|---|
| Tensile strength | 10.8 | 10.4 | 8.1 | 7.6 |
| 100% modulus | 9.4 | --- | 7.4 | 6.4 |
| Elongation | 350 | 167 | 250 | 280 |
| Tear resistance | 6.4 | --- | 5.3 | 5.5 |

Additional properties measured for Example 12 only were:
K Factor     0.2 MΩ km
Oxygen index     26.4
Volume swelling in fluid resistance test:
in DERV     5.0
in OX-38     4.2
in water     7.7
Elongation after ageing
at 110°C - 168% after 14 days, 150% after 28 days
at 135°C - 110% after 7 days, 64% after 14 days 30% after 21 days, 5% after 28 days

at 150°C - 80% after 3 days, 35% after 5 days 10% after 7 days.

Example 16

This was similar to Example 10, ecept that Silica HDK H20, Flectol # H and Weston 618 were omitted, and 10 parts zinc oxide, 1.5 parts zinc stearate, 1.5 parts Kenreact # TTS and 1 part Arbestab # DSTDP added. Initial tensile strength and elongation were 9.6 MPa and 298% respectively, and elongation after ageing 5 days at 150°C was 50%.

Example 17

This differed from Example 16 only in that 10 parts of Silica HDK H20 was retained and the zinc oxide content was only 6 parts. Tensile strength was 10.3 MPa, 100% modulus 8.4 MPa, elongation 260%, tear strength 4.2 N/mm.

Examples 18-19

Procedure A was used to blend 36 parts Hytrel # 4056, 60 parts Chemigum # HR 665, 4 parts Hytrel # masterbatch 10MS, 2 parts Hytrel # masterbatch G30HS, 70 parts Hydral # 710B, 30 parts Hydral # 705, 2 parts SRF, 20 parts Silica HDK H20, 4 parts Kemgard # 911A, 3 parts Sartomer # 350, 6 parts Dythal #, 1.5 parts Kenreact # TTS, 1.5 parts zinc stearate, 2 parts Vulcanox # MB-2, 0.5 parts Weston 618, 2 parts Silane Y9774, 4 parts Maglite # DE, and 10 parts of either Plasticator # 85 (Example 18) or Bisoflex 810T (stab) Example 19). Properties (in the same units as before) were as follows:-

| Example | 18 | 19 |
|---|---|---|
| Tensile strength | 9.2 | 9.6 |
| 100% modulus | 5.4 | 5.4 |
| Elongation | 300 | 300 |
| Tear resistance | 3.8 | 4.1 |
| K Factor | 0.01 | 0.35 |
| Oxygen Index | 29.5 | 28 |
| Elongation after ageing | | |
| at 135°C - 7 days | 190 | 200 |
| -14 days | 110 | 130 |
| -21 days | 80 | 50 |
| -28 days | 50 | 21 |
| at 150°C - 3 days | 120 | --- |
| - 5 days | --- | 140 |
| - 7 days | 60 | 40 |
| - 9 days | 40 | --- |

8

## Examples 20-22

Example 1 was modified for chemical crosslinking by adding respectively 1.5, 2.0 and 3.0 parts of Perkadox # 14-40, mixed in the mill for 5 minutes at about 120°C. Sheets 150 X 150 X 1.2 mm were cured in he press at 180°C for five minutes. Samples were cut and tested as before, and the properties observed were as follows (in the same units as before):

| Example | 20 | 21 | 22 |
|---|---|---|---|
| Tensile strength | 8.8 | 10.2 | 10.2 |
| 100% modulus | 7.4 | 9.2 | 9.4 |
| Elongation | 360 | 300 | 270 |
| Tear resistance | 10.8 | 7.4 | 6.0 |

## Example 23

Procedure A was used to blend 36 parts of Hytrel # 4056 with 60 parts Therban # 1707, 4 parts Hytrel # masterbatch 10MS, 2 parts Hytrel # masterbatch G30HS, 110 parts Ultrafine 15E, 20 parts Silica HDK-H20, 10 parts Platicator # 85, 2 parts SRF black, 4 parts Kemgard # 911A, 6 parts Dythal, 1.5 part Kenreact # TTS 1.5 parts zinc stearate, 2 parts Vulcanox # MB2/MG, 0.5 part Weston 618, 4 parts Maglite # DE and 3 parts Sartomer # 350. After irradiation to a dose of 100 kGy, the tensile strength was 8.4 MN/m², elongation to break 390% and tear strength 8.9 N/mm. After ageing for 10.8 days at 150°C (simulating the effect of 40,000hrs at 85°C) the retention of tensile strength was about 91% and the retention of elongation about 29% (value 115%). In an accelerated swelling test, samples were exposed for one week to DERV at 50°C (simulating the effect of 4 weeks at 20°C) and to OX-38 lubricating oil at 70°C (simulating 4 weeks at 50°C). The sample that had been exposed to DERV retained 94% of its initial tensile strength and 99% of its initial elongation, and volume swell was 14.1%; the sample that had been exposed to OX-38 retained 88% of its initial tensile strength and 95% of its initial elongation, and its volume swell was 11.6%.

## Example 24

This was identical with Example 23, except that the Sartomer 350 was replaced by the same quantity of HVA-2. Tensile strength was 8.5 MN/m², elongation to break 315% and tear strength 10.7 N/mm. After ageing for 10.8 days at 150°C the retention of tensile strength was about 72% and the retention of elongation 30% (value 95%). In the same accelerated swelling test as used in Example 23, the sample that had been exposed to DERV retained 96% of its initial tensile strength and 90% of its initial elongation, and its volume swell was 13.5%; the sample that had been exposed to OX-38 retained 91% of its initial tensile strength and 75% of its initial elongation, and its volume swell was 9.9%

## Example 25

This was identical with Example 23, except that the Plasticator # 85 was replaced by an equal quantity of Bisoflex # TOT; Tensile strength was 9.4 MN/m², elongation to break 450%, tear strength 11.7 N/mm. After ageing for 10.8 days at 150°C the retention of tensile strength was about 68% and the retention of elongation about 27% (value 120%). In the same accelerated swelling test as used in Example 23, the sample that had been exposed to DERV retained 93% of its initial tensile strength and 97% of its initial elongation, and its volume swell was 13.2%; the sample that had been exposed to OX-38 retained 82% of its initial tensile strength and 93% of its initial elongation; its volume swell was 11.0%.

## Claims

1. A halogen-free, flame-retardant elastomeric composition which is cross-linkable at least by high-energy irradiation and (when cross-linked) is resistant to sea-water, hydrocarbon oils and hydraulic fluids comprising

(A) an oil-resisistant elastomeric thermoplastic segmented copolymer selected from polyether-polyesters and polyether-polyamides;

(B) an elastomeric nitrile polymer having (i) a hydrocarbon main chain which chain is saturated or

**0 251 792**

contains up to a maximum of two double bonds and/or epoxidised double bonds for every five of its carbon atoms and (ii) a minimum of one -CN side-chain per 22 chain carbon atoms and up to one hetero side chain per four carbon atoms with the proviso that at least 70% of the hetero side chains are -CN;

(C) optionally up- to one part for each three parts of ingredient (B) of another miscible elastomer which is a diene elastomer or an acrylic elastomer; and

(D) alumina trihydrate;

Ingredient (A) constituting 10-70% of total elastomer content and ingredient (D) being present in an amount up to about twice the total elastomer content but sufficient for the composition to have an oxygen index of at least 25.

2. A composition as claimed in Claim 1 in which Ingredient (A) is a segmented polyester/polyether elastomer.

3. A composition as claimed in Claim 1 in which Ingredient (A) is a segmented polyester polyether elastomer constituted of polytetramethylene ether glycol terephthalate segments and 1, 4 butanediol segments.

4. A composition as claimed in Claim 1 in which Ingredient (A) is a segmented elastomeric polyether-polyamide.

5. A composition as claimed in Claim 1 in which Ingredient (A) is a segmented elastomeric polyether-polyamide constituted of polyamide segments derived from 12-amino dodecanoic acid (or its lactam) and polyether segments derived from 1, 4 butanediol.

6. A composition as claimed in any one of the preceding Claims in which Ingredient (B) is a random copolymer of butadiene and acrylonitrile.

7. A composition as claimed in any one of Claims 1-5 in which Ingredient (B) is a random butadiene/acrylonitrile copolymer modified by hydrogenation, epoxidization, or the inclusion of a third monomer.

8. A composition as claimed in Claim 7 in which Ingredient (B) is fully hydrogenated.

9. A composition as claimed in any one of Claims 1-5 in which Ingredient (B) is a random copolymer of butadiene and acrylonitrile modified by the inclusion of a third monomer which introduces -COOH side chains.

10. A process for making a halogen free, flame-retardant elastomeric composition which is cross-linkable at least by high-energy irradiation and (when cross-linked) is resistant to sea-water, hydrocarbon oils and hydraulic fluids comprising first blending

(A) an oil-resisistant elastomeric thermoplastic segmented copolymer selected from polyether-polyesters and polyether-polyamides

with

(B) an elastomeric nitrile polymer having (i) a hydrocarbon main chain which chain is saturated or contains up to a maximum of two double bonds and/or epoxidised double bonds for every five of its carbon atoms and (ii) a minimum of one -CN side-chain per 22 chain carbon atoms and up to one hetero side chain per four carbon atoms with the proviso that at least 70% of the hetero side chains are -CN at a temperature not less than 160°C and when a pre-blend has been prepared reducing the temperature below 150°C and mixing in alumina trihydrate at such reduced temperature; Ingredient (A) constituting 10-70% of total elastomer content and alumina trihydrate being present in an amount up to about twice the total elastomer content but sufficient for the composition to have an oxygen index of at least 25.

11. A process as claimed in Claim 10 in which up to one part for each three parts of Ingredient (B) of at least one other miscible elastomer which is either a diene elastomer or an acrylic elastomer is incorporated in the pre-blend before the temperature is reduced.

12. A process as claimed in Claim 10 or Claim 11 in which the temperature at which the alumina trihydrate is mixed in is about 135°C.

13. The use of the process claimed in any one of Claims 10-12 to make the composition claimed in any one of Claims 2-9.

14. A cable sheathed with a composition claimed in any one of Claims 1-9.

15. A cable sheathed with a composition made by the process claimed in any one of Claims 10-13.

10